(19) Europäisches Patentamt
European Patent Office
Office européen des brevets

(11) Veröffentlichungsnummer: **0 292 722 B1**

(12) **EUROPÄISCHE PATENTSCHRIFT**

(45) Veröffentlichungstag der Patentschrift: **06.03.91 Patentblatt 91/10**

(51) Int. Cl.$^5$: **G11B 7/24,** G11B 7/26

(21) Anmeldenummer: **88106797.9**

(22) Anmeldetag: **28.04.88**

# (54) Verwendung von Mischungen aus thermoplastischen Polycarbonaten und Copolymerisaten von Stryrolen mit Acrylnitril als Substrate für optische Datenspeicher.

(30) Priorität: **27.05.87 DE 3717836**
**04.03.88 DE 3807098**

(43) Veröffentlichungstag der Anmeldung: **30.11.88 Patentblatt 88/48**

(45) Bekanntmachung des Hinweises auf die Patenterteilung: **06.03.91 Patentblatt 91/10**

(84) Benannte Vertragsstaaten: **DE FR GB IT NL**

(56) Entgegenhaltungen:
**DE-A- 3 344 101**
**DE-A- 3 344 102**
**PATENT ABSTRACTS OF JAPAN, unexamined applications, P Field, Vol. 7, No. 73, 25. März 1983 THE PATENT OFFICE JAPANESE GOVERNMENT Seite 139 P 186**

(56) Entgegenhaltungen:
**PATENT ABSTRACTS OF JAPAN, unexamined applications, P Field, Vol. 9, No. 210, 28.August 1985 THE PATENT OFFICE JAPANESE GOVERNMENT Seite 52 P 383**
**PATENT ABSTRACTS OF JAPAN, unexamined applications, P Field, Vol.7, No. 282, 16 Dezember 1983 THE PATENT OFFICE JAPANESE GOVERNMENT Seite 45 P 243**

(73) Patentinhaber: **BAYER AG**
**W-5090 Leverkusen 1 Bayerwerk (DE)**

(72) Erfinder: **Berg, Klaus, Dr.**
**Hansastrasse 124**
**W-4150 Krefeld (DE)**
Erfinder: **Serini, Volker, Dr.**
**Sebastian-Kneipp-Weg 2**
**W-4150 Krefeld (DE)**
Erfinder: **Grigo, Ulrich, Dr.**
**Michelsheide 9**
**W-4152 Kempen 3 (DE)**
Erfinder: **Piejko, Karl-Erwin, Dr.**
**Roggendorfstrasse 57**
**W-5000 Köln 80 (DE)**

**EP 0 292 722 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung ist die Verwendung von Mischungen als Substrate für optische Datenspeicher bestehend aus

a) 10 bis 90 Gew.-%, bevorzugt 40 bis 80 Gew.-%, insbesondere 50 bis 70 Gew.-% eines thermoplastischen, aromatischen Polycarbonats, dessen Moleküle zu mindestens 75 Gew.-%, vorzugsweise zu mindestens 85 Gew.-% und insbesondere zu 100 Gew.-%, aus wiederkehrenden Struktureinheiten der Formel (1) bestehen,

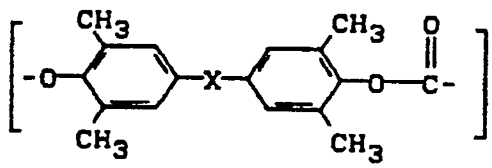

(1)

worin

X eine Einfachbindung, $C_1$-$C_6$-Alkylen, $C_2$-$C_6$-Alkyliden, $C_5$-$C_6$-Cycloalkyliden oder $C_5$-$C_6$-Cycloalkylen, bevorzugt Methylen, Butyliden oder Isopropyliden und besonders bevorzugt Isopropyliden bedeutet, und dessen Moleküle zu höchstens 25 Gew.-%, vorzugsweise zu höchstens 15 Gew.-%, insbesondere zu höchstens 8 Gew.-% und ganz besonders zu 0 Gew.-% aus wiederkehrenden Struktureinheiten der Formel (2) bestehen,

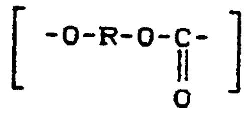

(2)

worin –R– einen Arylenrest bedeutet, der auch kernalkyliert oder kernhalogeniert sein kann, und der vorzugsweise 6 bis 36 C-Atome enthält und der besonders bevorzugt ein Rest der Formel (3) ist

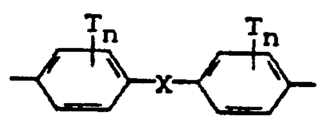

(3)

worin X die für Formel (1) genannte Bedeutung hat und außerdem

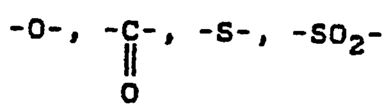 und

und Arylalkyliden sein kann und T ein $C_1$-$C_4$-Alkyl, Cl oder Br, und "n" 0 oder 1 oder 2 sind, und

b) 90 bis 10 Gew.-%, bevorzugt 60 bis 20 Gew.-% und insbesondere 50 bis 30 Gew.-% eines thermoplastischen Copolymerisats von Styrolen mit Acrylnitril, wobei der Gehalt an Acrylnitril von 0,5 bis 18 Gew.-%, vorzugsweise von 1,5 bis 15 Gew.-% und insbesondere von 2 bis 13 Gew.-%, bezogen auf das Gewicht des Copolymerisats, beträgt.

Beispiele für Arylalkylidenreste sind

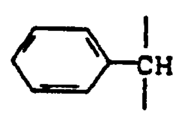

und

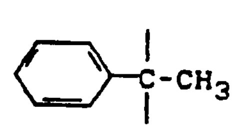

Die Mischungen stellen aufgrund ihrer hohen Steifigkeit niedrigen Doppelbrechung und insbesondere ihrer optischen Homogenität hervorragende Substrate für optische Datenspeicher dar, so daß solche Mischungen sich zur Herstellung von optisch-homogenen Formkörpern (zum Beispiel Compact Discs) mit besonders niedriger Doppelbrechung in achsialer, tangentialer und radialer Richtung zur Plattenfläche eignen. Hervorzuheben ist die für die Ausleseoptik eines Abspielgeräts wichtige Homogenität der Doppelbrechung über den ganzen Spritzgußkörper hinweg.

Die anteilmäßige Zusammensetzung einer solchen Abmischung, bei der nicht nur Verringerung, sondern auch Kompensation der Doppelbrechung auftritt, kann aufgrund unterschiedlicher Fließvorgänge der Schmelze von der Gestalt eines Formkörpers abhängen.

Die Information optischer Datenträger wird mit dem linear polarisierten Licht eines Lasers gelesen und im Falle beschreibbarer Datenspeicher auch eingeschrieben. Eines der Systeme für beschreib- und lösbare Verfahren sind die magnetooptischen Datenspeicher : Hier muß besonderer Wert auf doppelbrechungsfreies Substratmaterial gelegt werden, da eine geringfügige Drehung (unter 1°) der Licht-Schwingungsebene schon als Signal gelesen wird.

Doppelbrechung setzt sich in Kunststoffen (Thermoplasten) im wesentlichen aus 2 Faktoren zusammen : Einer materialspezifischen Komponente einerseits und einem verarbeitungsbedingten Anteil, der auch als Orientierungsdoppelbrechung bezeichnet wird, andererseits. Doppelbrechungsarme, thermoplastische Formteile können somit theoretisch durch zweierlei Maßnahmen hergestellt werden, entweder

a) durch die Wahl geeigneter Verarbeitungsparameter, beispielsweise durch Verarbeitung von niedrigviskosen Typen bei relativ hoher Temperatur wie etwa beim Spritzgießen oder Spritzprägen von Audio-Compact-Discs aus thermoplastischem Polycarbonat, oder

b) durch den Einsatz von Material, das von sich aus nur geringe Neigung zur Doppelbrechung zeigt wie beispielsweise Polymethylmethacrylate, welche für die Herstellung von Video-Discs verwendet werden.

Fall a) ist allerdings nur von theoretischem Interesse, da unter Spritzgußbedingungen die hierzu notwendige völlig fehlende Orientierung der Polymerketten nicht erreicht werden kann.

Im Fall b) wird der Einsatz von niedrig doppelbrechenden Thermoplasten zusätzlich durch die gleichzeitige Forderung nach niedriger Wasseraufnahme (kleiner gleich 0,3%) und einer gewissen Dauerwärmeformbeständigkeit (größer 80°C) erheblich limitiert.

Beschreibbare Speicher wie zum Beispiel magnetooptische Systeme erfordern beim Beschreiben eine relativ hohe Energie, um ein akzeptables Signal/Rausch-Verhältnis zu bekommen. Dazu wird eine Optik mit großer numerischer Apertur verwendet. Durch den Öffnungswinkel der Schreib- und Leseoptik bedingt, bekommt eine möglichst geringe optische Anisotropie auch für den Strahlenverlauf in tangentialer und radialer Richtung erhebliche Bedeutung. So zeigen Compact Discs aus Polycarbonat, die in achsialer Richtung bereits relativ niedrige Gangunterschiede der Doppelbrechung (20 nm/mm) aufweisen, tangential und radial noch hohe Meßwerte, typischerweise um 500 bis 1000 nm/mm. In Abhängigkeit von der Größe der numerischen Apertur addieren sich die Doppelbrechungsbeträge in tangentialer und radialer Richtung mehr oder weniger zu der Doppelbrechung in achsialer Richtung.

Erforderlich ist weiterhin, daß die Doppelbrechungswerte über die ganze Compact Disc hinweg eine relativ geringe Schwankungsbreite aufweisen, um eine eventuelle Kompensation geringfügiger Doppelbrechung leichter ausführen zu können.

Bekannt ist die allgemeine Möglichkeit, die Doppelbrechung eines Polymeren zu verringern, indem man ein Polymeres mit entgegengesetzter Doppelbrechung hinzufügt (J. Hennig, Vortrag auf der Tagung "Neue Polymere" in Bad Nauheim, 14./15.04.1986 : "Polymere als Substrate für optische Plattenspeicher" ; siehe auch US-Patent 4373065).

Aus der DE-OS 33 27 929 (Le A 22 015) sind doppelbrechungsfreie Kunststoffe bekannt, die diese Eigenschaften dadurch erreichen, daß mindestens zweiflächige Gebilde aus Kunststoff mit je einer optischen Achse senkrecht zur Flächennormalen unter einem Winkel von 90° parallel hintereinander angeordnet sind, und daß die Summe der Gangunterschiede überall nahezu Null ist. Vorzugsweise werden Folien so miteinander kombiniert, daß eine Kompensation der Doppelbrechung eintritt (Seite 6 der DE-OS, Absätze 2 und 3).

Geeignete Kunststoffe sind z.B. Polyarylensulfon, Polystyrol, Polyvinylchlorid oder Polyurethan. Vorzugsweise verwendet man Polymerisate, die gute optische Qualitäten haben, wie Styrol-Acrylnitril-Mischpolymerisate, Polymethylpenten, Polycarbonat, Polyacrylsäureester, Polymethacrylsäureester, Celluloseester oder Mischungen und Copolymerisate, welche die genannten Polymere enthalten. Ganz besonders bevorzugt werden Polycarbonat oder Mischungen von Kunststoffen, die mindestens 10 Gew.-% Polycarbonat enthalten, eingesetzt. Als Polycarbonate sind auch solche aus kernalkylierten Diphenolen, wie Tetramethylbisphenol-A geeignet.

Abmischungen von Tetramethylbisphenol-Polycarbonaten mit verschiedenen Copolymerisaten und/ oder Pfropfcopolymerisaten, auch mit Styrol-Acrylnitril-Copolymerisaten sind bekannt (siehe beispielsweise DE-OS 22 52 974 (Le A 14 616), DE-OS 22 59 564 (Le A 14 617), DE-OS 23 22 435 (Le A 15 045), DE-OS 23 29 585 (Le A 15 024), DE-OS 23 29 646 (Le A 15 108), DE-OS 33 14 736 (Le A 22 286) und DE-OS 34 30 234 (Le A 22 925)). Über die Verwendungsmöglichkeit solcher Blends als Substrate für optische Datenspeicher ist darin nichts beschrieben.

Daß Mischungen aus Tetramethylbisphenol-A-Polycarbonat und Styrol-Acrylnitril-Copolymerisate mit einem bestimmten Acrylnitril-Gehalt (2 bis 13%) einphasig und transparent sind, ist inzwischen auch in der Literatur beschrieben (.A.C. Fernandes, I.W. Barlow und D.R. Paul in Polymer 27 (1986), 1788-98).

Weiterhin wird in der DE-OS 33 44 101 (Le A 22 589) die Verwendung von Tetramethylbisphenol F-Polycarbonat (Bis(3,5-dimethyl-4-hydroxyphenyl)-methan=Tetramethylbisphenol F) in Kombination mit Styrolpolymerisaten als Flammschutzmittel beansprucht.

Die Herstellung und Weiterverarbeitung von einphasigen Mischungen aus Tetramethyl-bisphenol-F-Polycarbonaten mit Styrol-Acrylnitrilcopolymerisaten ist in der DE-OS 33 44 102 (Le A 22 784) beschrieben. Die Verwendung derartiger Mischungen als Substrate für optische Datenspeicher wird nicht darin angesprochen.

In der japanischen Offenlegungsschrift Sho-61-19656 werden Gemische aus Polycarbonaten mit Styrolharz-Copolymeren beschrieben, die als Rohstoffe für optische Apparate empfohlen werden. Die Polycarbonate werden aus Bisphenolen hergestellt, von denen eine Anzahl aufgeführt wird, darunter auch 2,2-Bis-(4′-hydroxy-3′,5′-dimethylphenyl)-propan. In den Beispielen wird allerdings ausschließlich Bisphenol-A-Polycarbonat eingesetzt.

Als Styrolharz-Copolymere kommen solche aus Styrol mit einem, zwei oder mehreren Vertretern einer Gruppe bestehend aus ungesättigten Mono- und Dicarbonsäuren sowie deren Derivaten in Frage. Diese ungesättigten Mono- und Dicarbonsäuren und deren Derivate werden in Mengen von 1 bis 30 Gew.-% in die Styrolharze einpolymerisiert.

Als Monocarbonsäuren werden Acrylsäure und Methacrylsäure, als deren Derivate Acrylamid und Methacrylamid, aber nicht Acrylnitril genannt.

Vielmehr wird gesagt, daß in dem Styrolharz über diese ungesättigten Verbindungen hinaus auch weitere, damit copolymerisierbare ungesättigte Verbindungen wie z.B. Acrylnitril, Methacrylnitril, Methylmethacrylat, Methylacrylat, Vinylacetat usw. zu Anteilen unter 10 Gew.-% miteinpolymerisiert werden dürfen.

Acrylnitril kann somit nur als dritte Komponente im Styrolharz gemäß Sho-61-19656 einbezogen werden.

Es hat sich nun gezeigt, daß durch die Auswahl eines speziellen Polycarbonats einerseits und durch die Wahl eines speziellen Styrolcopolymerisats andererseits Mischungen mit optimalen Ergebnissen in der optischen Qualität erzielt werden.

Die Lehre der EP-OS 0 199 824 führt nicht näher heran, da darin weder als Polycarbonate Tetraalkylbisphenol-Polycarbonate erwähnt sind, noch als Styrolharze Styrolacrylnitril-Copolymerisate erwähnt sind.

Die Einphasigkeit der erfindungsgemäß zu verwendenden Formmassen ist als notwendige nicht aber als hinreichende Bedingung für eine weitgehende optische Homogenität entsprechender spritzgegossener Formkörper anzusehen, wie folgendes Beispiel zeigt : Ein homogener einphasiger Blend aus Tetramethylbisphenol A- und Bisphenol A-Polycarbonat zeigt – natürlich auf höherem Doppelbrechungsniveau – starke Schwankungen der Doppelbrechung über den ganzen Formkörper hinweg (Beispiel 3).

Des weiteren können die erfindungsgemäßen Legierungen vorteilhaft auch für größer dimensionierte Datenspeicherplatten, die höhere Ansprüche an die Dimensionsstabilität stellen, verwendet werden. So sollte das Trägersubstrat bei 30 cm-Plattensystemen, die aus zwei durch einen Abstandshalter getrennten Scheiben mit aufgebrachten metallischen Speicherschichten bestehen, einen Elastizitätsmodul von mindestens 3000 N/mm$^2$ besitzen. Es wurde nun überraschenderweise gefunden, daß die erfindungsgemäßen Legierungen höhere Elastizitätsmodule aufweisen als aufgrund des jeweiligen Mischungsverhältnisses und bei additiver Mischungsfunktion der E-Module der Ausgangspolymeren zu erwarten war (s. Tabelle 1). So eignen sich bei entsprechenden Mischungsverhältnissen (bspw. s. Tabelle 1) die Tetramethylbisphenol-A-PC/Stryrolacrylnitril-Copolymer-Formmassen ausgezeichnet zur Anfertigung größer dimensionieter Datenspeicherplatten.

Die als Komponente a) einzusetzenden Polycarbonate sind als solche bekannt oder nach bekannten Verfahren herstellbar.

Die Molekulargewichte der Polycarbonate der Komponente a) liegen im allgemeinen zwischen $\overline{Mw}$ (Gewichtsmittelmolekulargewicht, gemessen per Gelpermeationschromatographie) zwischen 10.000 und 50.000, vorzugsweise zwischen 15.000 und 45.000 und insbesondere zwischen 20.000 und 30.000.

Als Molekulargewichtsregler kommen Phenol oder Alkylphenole wie p-tert.-Butylphenol, p-Isooctylphenol, 2,6-Dimethylphenol, und auch Säurechloride aromatischer Carbonsäuren wie Benzoylchlorid, p-tert.-Butylbenzoylchlorid in Frage.

Den Struktureinheiten (2) zugrundeliegende Diphenole (4) HO–R–OH sind vorzugsweise 2,2-Bis-(4-hydroxyphenyl)-propan, Bi-(4-hydroxyphenyl)-methan, 1,1-Bis-(4-hydroxyphenyl)-cyclohexan und 1,1-Bis-(4-hydroxyphenyl)-1-phenyl-1-methyl-methan.

Die als Komponente a) einzusetzenden Polycarbonate können auch in bekannter Weise (siehe beispielsweise DE-PS 25 00 092 bzw. US-PS 4 185 009) verzweigt sein. Beispiele für Verzweiger sind Verbindungen mit 3 oder mehr als 3 funktionellen Gruppen, also beispielsweise Triphenole oder Tetraphenole, wie 1.1.1-Tris-(4-hydroxyphenyl)-methan, Hexa-(4-(4-hydroxyphenylisopropyl)-phenyl)-ortho-terephthalsäureester und 1,4-Bis-((4',4''-dihydroxytriphenyl)-methyl)-benzol, aber auch 2,4-Dihydroxybenzosäure, Trimesinsäure und 3,3-Bis-(4-hydroxy-3-methyl-phenyl)-2-oxo-2,3-dihydroindol.

Die Molekulargewichte der als Komponente b) einzusetzenden Copolymerisate von Styrolen mit Acrylnitril können in weiten Bereichen variiert werden. Geeignet sind Gewichtsmittelmolekulargewichte von 30000 bis 600000, vorzugsweise 50.000 bis 250.000 und besonders bevorzugt 80.000 bis 200.000, welche gemessen werden nach bekannten Methoden der Gelpermeationschromatographie.

Die Uneinheitlichkeiten der Copolymeren liegen im Bereich von 0,5 bis 3,5

$$(U_n = \frac{\bar{M}_w}{\bar{M}_n} - 1)$$

und werden durch den Herstellungsprozeß
und die Herstellungsbedingungen variiert.

Für die Herstellung der Copolymerisate geeignete Styrole sind neben Styrol selbst beispielsweise noch α-Methylstyrol, p-Methylstyrol und 2,4-Dimethylstyrol geeignet.

Die Herstellung der als Komponente b) einzusetzenden Copolymerisate kann prinzipiell nach bekannten Verfahren erfolgen, als beispielsweise durch Masse-, Lösungs-, Suspensions- oder Emulsionspolymerisation, wobei nur darauf geachtet werden muß, daß der Gehalt an Acrylnitril in den vorgegebenen Grenzen von 0,5 bis 18 Gew.-% einpolymerisiert wird.

Die Copolymerisation erfolgt vorzugsweise radikalisch.

Die als Komponente b) geeigneten Copolymerisate sind im allgemeinen lineare Polymere. Man kann aber auch Copolymere mit einem verzweigten Aufbau verwenden.

Die Herstellung der erfindungsgemäß geeigneten Mischungen kann in bekannter Weise beispielsweise durch Compoundierung bei der Extrusion, die Verarbeitung der Mischungen zu Formkörpern beziehungsweise zu Datenspeichern erfolgt beispielsweise durch Spritzguß.

Die Verwendung der Mischungen als Substrate für optische Datenspeicher kann wie folgt erläutert werden : "Substrate" für optische Datenspeicher im erfindungsgemäßen Sinne ist das Material der mechanischen Grundlage einer Datenplatte, das sowohl als Träger für eine Informationsschicht bzw. -ebene dient als auch den Abstandhalter zwischen dieser informationstragenden und der äußeren -ebenen-Plattenoberfläche darstellt.

Der informationstragende Lichtstrahl muß sowohl zum Lesen als auch zum Schreiben unverändert das Substrat durchlaufen – auf dem Weg von der ebenen Plattenoberfläche zur gegenüberliegenden Datenseite ebenso wie - im Falle des Lesestrahls – nach Informationsübertragung von dieser wieder zur äußeren Oberfläche zurück, aus der er zum Detektor hin austritt.

Beispiele für optische Datenspeicher sind die Audio-Compact-Disc und die Video-Disc.

Beispiel 1

60 Tiele Tetramethylbisphenol-A-Homopolycarbonat der relativen Lösungsviskosität 1,30 (gemessen bei 25°C in $CH_2Cl_2$ bei 0,5 g in 100 ml Lösung) wurden mit 40 Teilen Styrol-Acrylnitril-Copolymerisat mit einem $\bar{M}w$ von 150.000 (gemessen durch Gelpermeationschromatographie), das 10 Gew.-% Acrylnitril enthält, bei 300°C compoundiert. Das erhaltene Compound wurde auf einer Netstal-Spritzgußmaschine zu Compact Discs mit 12 cm Durchmesser verspritzt (Massetemperatur ca. 320°C).

Beispiel 2 (Vergleichsbeispiel)

60 Teile Bisphenol-A-Homopolycarbonat der relativen Lösungsviskosität 1,20 (gemessen bei 25°C in $CH_2Cl_2$ bei 0,5 g in 100 ml Lösung) wurden mit 40 Teilen eines Styrolmaleinsäureanhydrid-Copolymerisats,

das 8 Gew.-% Maleinsäureanhydrid enthält, bei 280°C compoundiert. Das Copolymerisat hat ein $\overline{M}w$ von 257 000, ermittelt durch Gelpermeationschromatographie.

Das erhaltene Compound wurde auf Netstal-Spritzgußmaschine zu Compact Discs mit 12 cm Durchmesser verspritzt (Massetemperatur ca. 320°C).

Beispiel 3 (Vergleichsbeispiel)

60 Teile Tetramethylbisphenol A-Polycarbonat der relativen Lösungsviskosität 1,30 (gemessen bei 25°C in $CH_2Cl_2$ bei 0,5 g in 100 ml Lösung) wurden mit 40 Teilen eines Bisphenol A-Polycarbonats der relativen Lösungsviskosität 1,20 (gemessen bei 25°C in $CH_2Cl_2$ bei 0,5 g in 100 ml Lösung) bei 300°C compoundiert.

Das erhaltene Compound wurde auf einer Netstal-Spritzgußmaschine zu Compact Discs mit 12 cm Durchmesser verspritzt (Massetemperatur 320°C).

Die in den Beispielen 1 bis 3 erhaltenen Compact Discs wurden hinsichtlich Doppelbrechung an drei verschiedenen Punkten – 25 mm, 40 mm und 55 mm vom Mittelpunkt aus -in achsialer, tangentialer und radialer Richtung untersucht. Hierbei wurde die Doppelbrechung anhand von Gangunterschiedsmessungen durch Verwendung eines üblichen Komparators mittels eines Polarisationsmikroskops beurteilt. Außerdem wurde eine visuelle Beurteilung der Compact-Discs hinsichtlich Transparenz vorgenommen.

Zusätzlich wurden ausdem Compound des Beispiels 1 sowie den entsprechenden Ausgangsstoffen Prüfkörper für eine E-Modul-Bestimmung nach DIN 53 457 angefertigt.

Beispiel 1

| Compact Disc ist klar transparent | | Entfernung vom Disc-Mittelpunkt 25 mm | 40 mm | 55 mm |
|---|---|---|---|---|
| Gangunterschied in nm/mm | achsial | +1 | 0 | - 1 |
| | tangential | -205 | -212 | -192 |
| | radial | +200 | +201 | +180 |

Beispiel 2 (Vergleichsbeispiel)

| Compact Disc ist transparent, aber leicht getrübt | | Entfernung vom Disc-Mittelpunkt 25 mm | 40 mm | 55 mm |
|---|---|---|---|---|
| Gangunterschied in nm/mm | achsial | -28 | -30 | +40 |
| | tangential | -190 | -208 | -225 |
| | radial | +230 | +166 | +180 |

Beispiel 3 (Vergleichsbeispiel)

| Compact Disc ist klar transparent | | Entfernung vom Disc-Mittelpunkt 25 mm | 40 mm | 55 mm |
|---|---|---|---|---|
| Gangunterschied in nm/mm | achsial | +77 | +9 | -38 |
| | tangential | -588 | -570 | -623 |
| | radial | +633 | +540 | +571 |

| Tabelle 1 | E-Modul-Bestimmung nach DIN 53 457 Werte in $N/mm^2$ der Komponenten bzw. der Abmischung des Beispiels 1 |
|---|---|
| Tetramethylbisphenol-A-PC (MPC) | 2400 |
| Styrolacrylnitrilcopolymerisat (SAN) | 3300 |
| MPC/SAN-Compound (60/40) | 3100 |

## Ansprüche

1. Verwendung von Mischungen als Substrate für optische Datenspeicher bestehend aus
a) 10 bis 90 Gew.-% eines thermoplastischen, aromatischen Polycarbonats, dessen Moleküle zu mindestens 75 Gew.-% aus wiederkehrenden Struktureinheiten der Formel (1) bestehen,

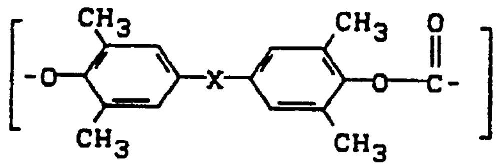
(1)

worin
X eine Einfachbindung, $C_1$-$C_6$-Alkylen, $C_2$-$C_6$-Alkyliden, $C_5$-$C_6$-Cycloalkyliden oder $C_5$-$C_6$-Cycloalkylen bedeutet, und dessen Moleküle zu höchstens 25 Gew.-% aus wiederkehrenden Struktureinheiten der Formel (2) bestehen,

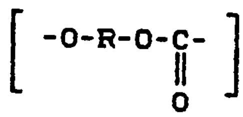
(2)

worin –R– einen Arylenrest bedeutet, der auch kernalkyliert oder kernhalogeniert sein kann, und
b) 90 bis 10 Gew.-% eines thermoplastischen Copolymerisats von Styrolen mit Acrylnitril, wobei der Gehalt an Acrylnitril von 0,5 bis 18 Gew.-%, bezogen auf das Gewicht des Copolymerisats, beträgt.

2. Verwendung gemäß Anspruch 1, dadurch gekennzeichnet, daß in der Komponente b) der Gehalt an Acrylnitril von 1,5 bis 15 Gew.-% beträgt.

3. Verwendung gemäß Ansprüche 1 und 2, dadurch gekennzeichnet, daß die Mischung aus 40 bis 80 Gew.-% an Komponente a) und 60 bis 20 Gew.-% an Komponente b) besteht.

4. Verwendung gemäß Anspruch 1, dadurch gekennzeichnet, daß die Komponente a) mindestens 85 Gew.-% an wiederkehrenden Struktureinheiten der Formel (1) bestehen und zu höchstens 15 Gew.-% aus wiederkehrenden Struktureinheiten der Formel (2) bestehen.

5. Verwendung gemäß Ansprüche 1 und 4, dadurch gekennzeichnet, daß in den Struktureinheiten (2) der Polycarbonatkomponente a) –R– 6 bis 36 C-Atome enthält.

6. Verwendung gemäß Anspruch 5, dadurch gekennzeichnet, daß –R– ein Rest der Formel (3) ist

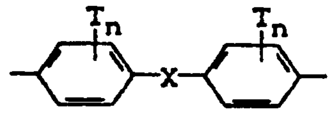

(3)

worin X die in Anspruch 1 genannte Bedeutung hat und außerdem

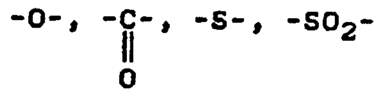

und Arylalkyliden sein kann und T ein $C_1$-$C_4$-Alkyl, Cl oder Br, und "n" 0 oder 1 oder 2 sind.

7. Verwendung gemäß Ansprüche 1 bis 4, dadurch gekennzeichnet, daß die Komponente a) zu 100 Gew.-% aus wiederkehrenden Struktureinheiten der Formel (1) besteht.

## Claims

1. The use of mixtures as substrates for optical data stores consisting of

a) from 10 to 90% by weight of a thermoplastic aromatic polycarbonate whose molecules consist to an extent of at least 75% by weight of recurrent structural units corresponding to formula (1)

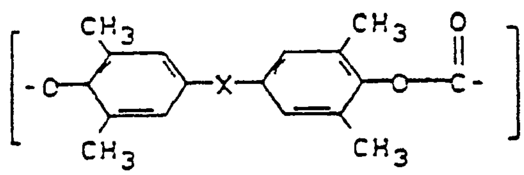

(1)

wherein

X denotes a single bond, $C_1$-$C_6$-alkylene, $C_2$-$C_6$-alkylidene, $C_5$-$C_6$-cycloalkylidene or $C_5$-$C_6$-cycloalkylene and at most 25% by weight of the molecules consist of recurrent structural units corresponding to formula (2)

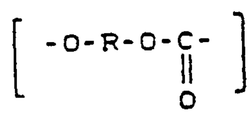

(2)

wherein R denotes an arylene group which may be alkylated or halogenated in the nucleus and

b) from 90 to 10% by weight of a thermoplastic copolymer of styrenes with acrylonitrile, the acrylonitrile content amounting to 0.5 to 18% by weight, based on the weight of the copolymer.

2. Use according to Claim 1, characterised in that the acrylonitrile content in component b) is from 1.5 to 15% by weight.

3. Use according to Claims 1 and 2, characterised in that the mixtures consists to an extent of 40 to 80% by weight of component a) and 60 to 20% by weight of component b).

4. Use according to Claim 1, characterised in that component a) consists to an extent of at least 85% by weight of recurrent structural units corresponding to formula (1) and to an extent of at most 15% by weight of recurrent structural units corresponding to formula (2).

5. Use according to Claims 1 and 4, characterised in that R in the structural units (2) of the polycarbonate component a) contains 6 to 36 carbon atoms.

6. Use according to Claim 5, characterised in that R is a group corresponding to formula (3)

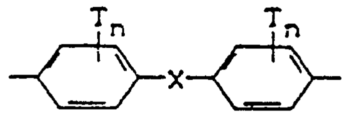

(3)

wherein X has the meaning indicated in Claim 1 and may in addition stand for

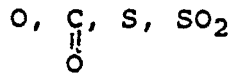

or arylalkylidene, T stands for a $C_1$-$C_4$-alkyl or Cl or Br, and n stands for 0 or 1 or 2.

7. Use according to Claims 1 to 4, characterised in that component a) consists to an extent of 100% by weight of recurrent structural units corresponding to formula (1).

## Revendications

1. Utilisation, à titre de substrats pour des mémoires optiques de données, de mélanges consistant en a) 10 à 90% en poids d'un polycarbonate aromatique thermoplastique, dont les molécules consistent, pour au moins 75% en poids, en des motifs structurels récurrents de formule (1)

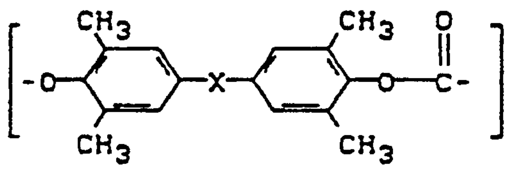

(1)

dans laquelle
X représente une liaison simple, un groupe alkylène en $C_1$ à $C_6$, alkylidène en $C_2$ à $C_6$, cycloalkylidène en $C_5$ ou $C_6$ ou cycloalkylène en $C_5$ à $C_6$, et dont la molécule consiste, pour 25% au maximum, en des motifs structurels récurrents de formule (2)

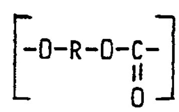

(2)

dans laquelle –R– représente un reste arylène, qui peut également être alkylé sur le noyau ou halogéné sur le noyau, et
b) 90 à 10% en poids d'un copolymère thermoplastique de styrène avec l'acrylonitrile, la teneur en acrylonitrile se situant entre 0,5 et 18% en poids, sur la base du poids du copolymère.

2. Utilisation selon la revendication 1, caractérisée en ce que, dans le constituant b), la teneur en acrylonitrile est de 1,5 à 15% en poids.

3. Utilisation selon les revendications 1 et 2, caractérisée en ce que le mélange consiste en 40 à 80% en poids du constituant a) et en 60 à 20% en poids du constituant b).

4. Utilisation selon la revendication 1, caractérisée en ce que les constituants a) consistent en 85% en poids au moins en des motifs structurels récurrents de formule (1) et pour 15% en poids au maximum en des motifs structurels récurrents de formule (2).

5. Utilisation selon les revendications 1 et 4, caractérisée en ce que, dans les motifs structurels (2) du constituant polycarbonate a), le reste –R– contient 6 à 36 atomes de carbone.

6. Utilisation selon la revendication 5, caractérisée en ce que le reste –R– est un reste de formule (3)

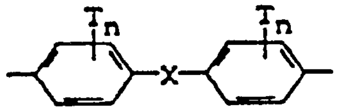

(3)

dans laquelle X a le sens indiqué à la revendication 1 et peut représenter en outre

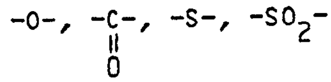

et un groupe arylalkylidène, et T représente un groupe alkyle en $C_1$ à $C_4$, Cl ou Br, et l'indice "n" vaut 0, 1 ou 2.

7. Utilisation selon les revendications 1 à 4, caractérisée en ce que le constituant a) consiste, pour 100% en poids, en des motifs structurels récurrents de formule (1).